# EUROPÄISCHE PATENTSCHRIFT

(11) **EP 2 013 065 B1**
(45) Veröffentlichungstag und Bekanntmachung des Hinweises auf die Patenterteilung: **29.09.2010**
(21) Anmeldenummer: 07722355.0
(22) Anmeldetag: 29.04.2007
(51) Int. Cl.: B61B 1/00, B61K 1/00

(54) **AKTIVES SCHIENENGEBUNDENES TRANSPORTSYSTEM**
ACTIVE RAIL TRANSPORT SYSTEM
SYSTEME DE TRANSPORT ACTIF SUR RAILS

(30) Priorität: 30.04.2006 DE 102006020546
(43) Veröffentlichungstag der Anmeldung: 14.01.2009
(73) Patentinhaber: Stahn, Uwe, 12167 Berlin (DE)
(72) Erfinder: Stahn, Uwe, 12167 Berlin (DE)
(74) Vertreter: Hoffmann, Klaus-Dieter
(86) Internationale Anmeldenummer: PCT/DE2007/000798
(87) Internationale Veröffentlichungsnummer: WO 2007/124740

(56) Entgegenhaltungen:
- DE-C1- 10 253 485
- GB-A- 1 213 453
- US-A- 3 430 580
- US-A- 3 901 160

## Beschreibung

Die Erfindung betrifft ein aktives, schienengebundenes Transportsystem für den öffentlichen, individuellen und automatisierten Verkehr von Personen oder Gütern auf herkömmlichen Schienen ohne Fahrer, bei dem zwei automatisch gesteuerte Führungssysteme derart angeordnet sind, dass aus dem fahrenden Verband (Zug) einzelne Wagen mit eigenem Antrieb, Bremse und Lenkung nur durch Wechsel des die Lenkung mechanisch beeinflussenden Führungssystems, durch das Absenken und Anheben des zugehörigen Abtastsystems, ausgeleitet, abgebremst, ent- und/oder beladen und dann an anderer Stelle, nachdem die Geschwindigkeit der einzelnen Wagen der des Verbandes angeglichen wurde, wieder in einen fahrenden Verband (Zug) einleitbar sind, wobei das erste Führungssystem mit einem ersten Abtastsystem an jedem Wagen und den herkömmlichen Schienen der laufenden Traktion dient und das zweite Führungssystem mit einem zweiten Abtastsystem, neben dem ersten Abtastsystem an jedem Wagen angeordnet, und den seitlich neben den herkömmlichen Schienen angebrachten zusätzlichen Führungsschienen die Richtung beim Überfahren von Weichen bestimmt. Ein solches Transportsystem ist aus dem Patent DE 102 53 485 C1 bekannt. Es verkehrt wie der Sprinter, ohne jeden Zwischenhalt, jedoch in kleinen Einheiten automatisch und Individuell zu jedem Bahnhof des Netzes. Die einzelnen Einheiten können für verschiedene Ansprüche optimiert werden. So kann es z.B. Einheiten geben, die um 8 Personen und ein Auto oder aber Güter befördern können. Es vereint die Vorteile des individuellen Verkehrs auf einer Autobahn mit der Spurführung der Schiene. Das Ergebnis ist ein automatisches öffentliches Verkehrsmittel ohne Fahrer bei dem das Lenken die vorhandene Schiene übernimmt. Überholt muß nicht werden, da alle Wagen mit der gleichen, hohen Geschwindigkeit von z.B. 200 km/h fahren. Fahrgäste oder Güter mit einem gemeinsamen Ziel bestellen einen Wagen zu einem speziellen Bahnhof, steigen ein und geben ihr Ziel an. Ist ein Startfenster (wie beim Flugzeug) vorhanden, werden sie auf die Systemgeschwindigkeit beschleunigt und können dann einzeln oder in Gruppen in den fließenden Verkehr Integriert werden. Dieses Patent macht es auch möglich, dass sie dann am Ziel ihrer Reise ebenfalls einzeln oder in Gruppen aus dem fließende Verkehr heraus fahren können.
Dadurch, dass das äußere Abtastsystem immer beide Abtasträder gleichzeitig anhebt bzw. absenkt funktioniert es jedoch nicht, dass an einer Stelle nach links, rechts und geradeaus gefahren werden kann - was bei Einmündungen und Kreuzungen von Trassen wichtig ist. Im Mischbetrieb mit der heutigen Eisenbahn ist es ebenfalls nicht möglich über eine aktive Weiche zu fahren und völlig frei die Richtung zu bestimmen. Auch ein Wechsel der Spurweite während der Fahrt ist mit diesem System nicht möglich. Da in verschiedenen Ländern die Gleise unterschiedlich breit sind, muß man heute entweder umsteigen oder die Wagen werden bei sehr langsamer Geschwindigkeit der anderen Spurweite angepasst.

Aufgabe der Erfindung, im Folgenden "Synchrotrain" genannt, ist es, die Nachteile des Standes der Technik zu beseitigen.

Die Aufgabe wird mit den Merkmalen des 1. Patenanspruchs gelöst. Vorteilhafte Weiterentwicklungen und Ausgestaltungen sind Gegenstand der Unteransprüche.

Für den Betrieb des Synchrotrains sind vier wesentliche Teile notwendig.
- Die Wagen, welche auf dem vorhandenen Netz verkehren. Sie können verschiedenen Eigentümern gehören, Ähnlich wie Häuser verschiedenen Vermietern oder Eigentümern bzw. Eigentümergesellschaften,
- Das Netz auf dem der Synchrotrain verkehren kann. Auch dies kann in zusammenhängenden oder Teilbereichen verschiedenen Eigentümern gehören.
- Davon unabhängig können die Bahnhöfe betrieben werden. Zum Beispiel so, wie heute Flughäfen betrieben werden.
- Der Steuerung und damit den Steuerzentralen fällt die bedeutendste Rolle zu. Sie müssen, ähnlich wie die Fluglotsen heute - nur vollautomatisch, für den reibungslosen Verkehr sorgen. Sie überwachen den Verkehr in einem bestimmten Bereich, kommunizieren mit den angrenzenden Steuerzentralen und sind verantwortlich für die Streckenauslastung.

Wagen können von beliebigen Herstellern produziert werden. Sie müssen jedoch alle einem für den Betrieb des Synchrotrains notwendigen Anforderungskatalog gerecht werden, Dieser legt neben allgemeinen Anforderungen im Wesentlichen für verschiedene Gesamtmassen und Luftwiderstände der Wagen entsprechende Motorleistungen fest.
Prinzipiell kann jeder solch einen Wagen erwerben und für den öffentlichen Betrieb bereit stellen (genaueres weiter unten). Er ist jedoch auch für dessen Wartung und Reinigung zuständig. Ähnlich wie bei der Verwaltung von Wohnungen verschiedener Eigentümer ist auch eine Verwaltung der Wartung und Reinigung der Wagen denkbar.
Die Kosten für die Nutzung sollten in zwei Teile unterteilt werden. Einem Bereitstellungapreis abhängig vom Wagentyp und einem Kilometerpreis abhängig vom Gewicht das transportiert wird.

Das derzeitige Netz der Bahn benötigt für den Betrieb des Synchrotrains nur kleine Veränderungen:
- Aufbau spezieller Bahnhöfe (genaueres weiter unten) mit passiven Weichen
- Erweiterung einiger aktiver Weichen um externe Führungen zu kombinierten Weichen
- Anpassung von Kreuzungen von Trassen und Abzweigungen an die hohen Geschwindigkeiten
- Erweiterung des Lichtraumprofils im Gleis- und Stromabnehmerbereich
- Beseitigung von Kreuzungen mit Straßen
- Ergänzung von Meldeeinrichtungen in Tunneln und in den Bergen (genaueres weiter unten)

Zur Beschleunigung, an Steigungen und zum Bremsen können in das Gleis eingebaute Linearmotoren benutzt werden. Denn damit ist die zusätzliche Leistung genau dort installiert wo sie immer gebraucht wird und muß nicht als ungenutzte Last ständig mit transportiert werden.
Auch hier kann es, wie bei den Wagen, verschiedene Eigentümer auf den einzelnen Netzabschnitten geben. Sie sind für die Funktionsfähigkeit aller Einrichtungen in ihrem Bereich verantwortlich und legen die Kosten pro Wagen und zurückgelegter Strecke fest oder verhandeln mit einzelnen Fahrzeugverwaltungen Pauschalpreise.

Die Bahnhöfe sind nur für den Synchrotrain geeignet und gehören Betreibern oder Betreibergesellschaften, die für die Bereitstellung der Logistik von Be- und Entladung sowie für die Durchführung von Sicherheits- und Zollkontrollen Bahnhofsgebühren in Rechnung stellen.

Steuerungszentralen sind miteinander vernetzt und jeweils unabhängig von einander. Sie haben Schnittstellen zu den jeweils benachbarten Steuerungszentralen und den in ihrem Bereich befindlichen Bahnhöfen. In ihnen wird der Fahrverlauf eines Wagens speziell an Kreuzungen, Einmündungen und Bahnhöfen berechnet und bei Bestätigung durch den Kunden reserviert (genaueres weiter unten) und nach Fahrtbeginn auch überwacht. Sie sorgen dafür, dass die Strecken nur zu maximal 2/3 ausgelastet sind, da sonst im Falle einer Störung das Netz zusammenbrechen könnte. Vielleicht kann diese Auslastung nach einschlägigen Erfahrungen mit dem System steigen.
Die Kosten werden den Netz- und Bahnhofsbetrelbem in Rechnung gestellt.

Für die zuverlässige Steuerung des Synchrotrains sind zwei unabhängige Steuerungssysteme notwendig. Eine zentrale mit den Steuerungszentralen (siehe oben) für die Streckenplanung und Überwachung sowie einer Steuerung des Wagens in Abhängigkeit vom vorausfahrenden und nachfolgenden Wagen (genaueres weiter unten).

Für jeden Wagen wird vor Fahrtantritt die gesamte Strecke berechnet und der benötigte Platz auf dem jeweiligen Gleisabschnitt reserviert. Dies wird durch die konstante Geschwindigkeit im gesamten Netz möglich. Damit wird jeglicher Halt oder auch nur Bremsen unterwegs ausgeschlossen. Dazu müssen die Wagen natürlich mit einer Toilette und bei Interkontinentalfahrten (Europa - Aslen - Afrika, bzw. Nord- - Südamerika) mit Schlaf- und Waschmöglichkeiten versehen sein. Zur Versorgung mit Essen können Versorgungsfahrzeuge, wie beim Wechsel der Spannungswandler, parallel fahren.
Nach dem Start kommunizieren die Wagen nur dann mit der jeweils zuständigen Zentrale, wenn es Abweichungen vom Plan gibt. Dort werden dann Informationen an alle von dieser Abweichung betroffenen Wagen generiert und an diese versendet (z.B. GSM).
Da in Tunneln oder in bergiger Umgebung teilweise keine Kommunikation über Funk möglich ist, könnte eine HF-Modulation der Stromzufuhr und die Weiterleitung per Kabel eine sichere Verbindung herstellen.

Für die Steuerung der Wagen ist kein GPS erforderlich. Die verfügbaren Strecken liegen fest und die jeweilige Position auf dieser kann über eine Wegmessung erfolgen. Diese ist sowieso zur Einhaltung der Geschwindigkeit notwendig. Nach jeder Abzweigung ist ein Referenzpunkt, der die Wagen eicht. Dieser dient auch dem Zentralsystem zur Berechnung der Streckenbelegung.
Jeder Wagen sendet Abweichungen vom Plan nicht nur an das Zentralsystem (siehe oben) sondern auch an seinen Nachfolger (z.B. mit GSM). Der Nachfolger wird ihm vom Zentralsystem für den jeweiligen Streckenabschnitt mitgeteilt. Da auch die direkte Funkverbindung zum Nachfolger in Tunneln oder in bergiger Umgebung teilweise nicht möglich ist, könnte ebenfalls eine HF-Modulation der Stromzufuhr oder ein lokales Funksystem die Informationen zum Nachfolger und Vorgänger übertragen.

Die Anfrage für eine Fahrt kann per Telefon, Internet, Handy, am Bahnhof oder im Wagen (für Änderungen des Ziels) selbst erfolgen. Dazu sind Informationen über Start, Ziel, Wagentyp, Zeit oder Zeitfenster notwendig.
Start- und Zielbahnhof sind genau auswählbar oder ein Start- bzw. Zielgebiet. Damit kann der Kunde die unterschiedlichen Preise der verschiedenen Netz- und Bahnhofsbetreiber bei seiner Auswahl berücksichtigen.
Die Anfrage wird allen Fahrzeugverwaltungen zur Verfügung gestellt. Diese können innerhalb weniger Sekunden ein oder mehrere Angebote abgeben, welche jeweils von den Steuerungszentralen freigegeben und die Belegung der Strecke als "im Angebot" im System markiert sind.
Für das Einholen von Angeboten gibt es vier Modi:
- mit und ohne bei anderen "im Angebot" befindliche Reservierungen
- Angebote werden bis zur Auswahl reserviert (ev. kostenpflichtig) oder nicht
Der Kunde wählt ein Angebot und reserviert, sofern nicht in der Zwischenzeit ein anderer reserviert hat
Über Sonderpreise können Betriebsfahrten, z.B. zur Wartung in eine Werkstatt, reduziert werden.
Da die Kosten gewichtsabhängig sind, ist der endgültige Preis erst nach der vollständigen Beladung des Wagens, also nach dem Start bestimmbar.

Die Züge für das herkömmliche System müssen nur auf einer Strecke, auf der bereits der Synchrotrain betrieben wird, mit der konstanten Geschwindigkeit fahren und die notwendigen Kommunikationseinrichtungen mitführen.

Der Vorteil dieser Erfindung liegt in einer drastischen Verkürzung der Stand- und Wartezeiten sowie der Reduzierung der Energiekosten. Enorme Energie- und Kosteneinsparungen sind dadurch möglich, dass auf Grund des Funktionsprinzips, wie bei der heutigen Eisenbahn, auf Knautschzonen, Airbags, Aufprallschutz und eine Sicherheitsfahrgastzelle, wie aus dem Autobereich, verzichtet werden kann. Der einzelne Wagen wird nur noch dann abgebremst und beschleunigt wenn er selbst ent- ober beladen wird. Und dann ist er auch noch viel leichter als vergleichbare Autos heute. Damit sinken die Energiekosten zusätzlich. Die Antriebsmotoren können individuell für die jeweils maximal zu transportierende Last pro Wagen für eine konstante Drehzahl optimiert werden. Sie müssen nur Lastwechsel durch Wind ausgleichen können. Beschleunigungen, welche nur noch im Bahnhofsbereich benötigt werden, oder höhere Belastungen bei Steigungen können über externe Linearmotoren realisiert bzw. ausgeglichen werden. Dadurch entfallen schwerere Schaltgetriebe. Die Energie vom Bremsen, welches ebenfalls nur noch im Bahnhofsbereich und bei Gefälle erfolgt, kann in potentieller Energie gespeichert und / oder über Lineargeneratoren den startenden Wagen bzw. dem Gegenverkehr zur Verfügung gestellt werden.

Es gibt somit keine unnötigen Standzeiten, Beschleunigungen und Abbremsungen. Der Synchrotrain ähnelt somit dem heutigen Sprinter, nur fahrt dieser dann an jeden Punkt des Netzes ohne Stopp, soweit das Festland trägt. Da die Länge der Züge durch den Direktantrieb jedes Wagens nicht mehr beschränkt ist, werden die Kapazitäten der Schiene besser genutzt. Die Investitionskosten für ein neuartiges individuelles Verkehrsmittel könnten kaum niedriger sein, da keine neuen Trassen und Fahrwege benötigt werden.

Die Erfindung wird nun anhand der Zeichnungen erläutert. Es zeigen:
Fig. 1: eine passive Weiche
Fig. 2: eine aktive Weiche im Zustand Geradeaus
Fig. 3: eine aktive Weiche im Zustand Abbiegen
Fig. 4: Anlage zum Wechsel der Spurweite
Fig. 5: tragende Räder auf zwei Spurweiten
Fig. 6: Prinzipskizze des Fahrwerks eines Wagens mit einer gelenkten Achse
Fig. 7: Prinzipskizze eines Bahnhofs
Fig. 8: Kreuzung zweier Fahrwege ohne das Wagen bremsen müssen
Fig. 9: wie Fig. 8 und der Möglichkeit zu wenden

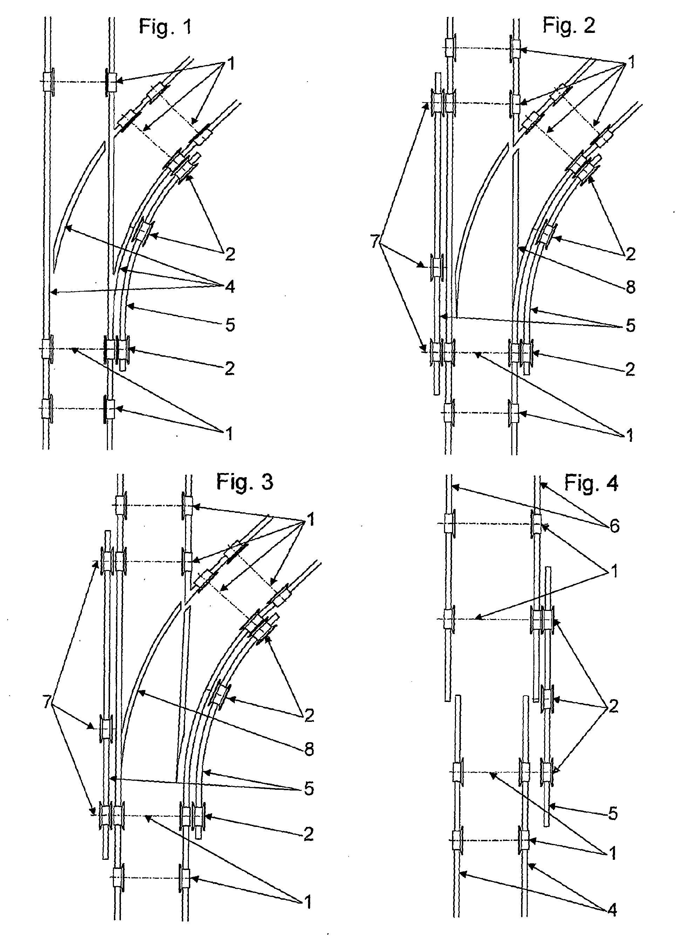

Um an einer Stelle nach linkes, rechts und geradeaus fahren zu können gibt es nicht nur zwei, sondern drei Abtastsysteme, die unabhängig voneinander angehoben und abgesenkt werden können 1, 2, 7. Derzeitige, wie auch Wagen des Synchrotrains, durchfahren die passive Weiche Fig. 1 geradeaus auf Grund der Radkonstruktion bzw. des aktiven ersten Abtastsystems 1 ohne vom Vorhandensein der passiven Weiche in irgendeiner Weise berührt zu werden.
Das Abbiegen oder Einfädeln ist nur dann möglich, wenn der Wagen über die unabhängig voneinander heb- und senkbaren Abtastsysteme 1, 2, 7 verfügt. Zum Abbiegen nähert sich ein Wagen mit aktivem ersten Abtastsystem 1. Im Bereich der passiven Weiche senkt er z.B. das rechte Abtastsystem 2 ab. Hat dieses Funktionsfähigkeit gemeidet, wird das erste Abtastsystem 1 angehoben. Das rechte Abtastsystem 2 ist nun aktiv und lenkt den Wagen von der herkömmlichen Spur ab. Hat der Wagen den letzten Schnittpunkt der Gleise passiert, wird das erste Abtastsystem 1 wieder abgesenkt. Hat dieses wiederum Funktionsfähigkeit gemeidet, wird das rechte Abtastsystem 2 nun wieder angehoben und der Wagen verhält sich wieder wie herkömmliche Wagen. Beim Einfädeln läuft die gleiche Schrittfolge nur anders herum ab.

Für den Mischbetrieb von heutiger Eisenbahn und den Wagen des Synchrotrains müssen die aktiven Weichen jeweils rechts und links mit einer zusätzlichen Führungsschiene 5 ausgestattet werden, siehe Fig. 2 und Fig. 3. Diese Führungsschienen 5 beeinflussen die heutige Eisenbahn nicht. Durch sie wird es jedoch jedem Wagen des Synchrotrains ermöglicht, völlig unabhängig vom Schaltzustand der aktiven Weiche, ja sogar auch während der Umschaltung dieser, individuell seine Richtung zu bestimmen. Dazu muss ein Wagen nur das rechte oder linke Abtastsystem 2, 7 absenken und danach das erste Abtastsystem 1 anheben. Kurz vor dem Ende der kombinierten Weiche muss das erste Abtastsystem 1 wieder abgesenkt und das rechte 1 bzw. linke 2 wieder angehoben werden.

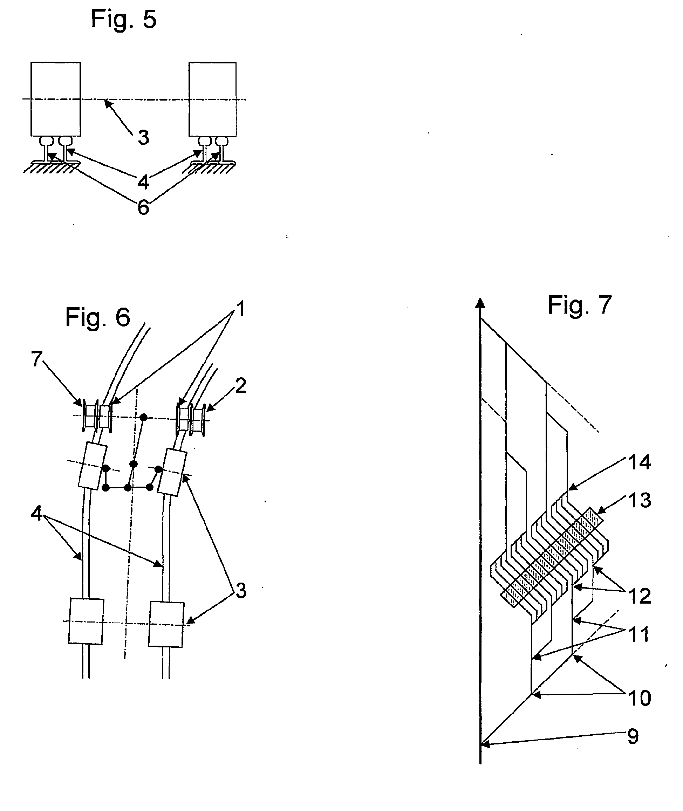

Um einen Wechsel der Spurweite bei voller Betriebsgeschwindigkeit durchführen zu können, ist das erste Abtastsystem 1 mit der Möglichkeit ausgestattet, den Abstand der beiden Abtasträder im angehobenen Zustand zueinander zu verändern Fig. 4.
Nähert sich ein Wagen des Synchrotrains mit aktivem ersten Abtastsystem 1 dem Ende einer Spurweite und kommt in den Bereich der Wechselanlage 5, Fig. 4, dann setzt er das rechte, bzw. linke Abtastsystem 2, 7 ab. Danach wird das erste Abtastsystem 1 angehoben. Nun ist z.B. das rechte Abtastsystem 2 aktiv. Durch die breiten tragenden Räder 3, Fig. 5 und 6, kann der Wagen auf beiden Spurweiten fahren. Jetzt wird der Abstand der beiden Räder des ersten Abtastsystems 1 im angehobenen Zustand auf die neue Spurbreite eingestellt und das Abtastsystem 1 anschließend wieder abgesenkt. Danach wird das Abtastsystem 2 wieder angehoben und der Wagen verhält sich wieder wie herkömmliche Wagen dieser Spurbreite.

Die einfachste Ausprägung eines Wagens des Synchrotrains zeigt schematisch Fig. 6. Hier sind die Abtastsysteme 2 und 7 angehoben und nur das erste Abtastsystem 1 bewegt die Lenkung. Da unter diesen Bedingungen die Hinterräder einen kleineren Radius fahren als die Vorderräder, müssen die Hinterräder etwas breiter sein. Die Breite Ist abhängig von der Wagenlänge und dem kleinsten Kurvenradius. Schließt die Oberkante der Schiene 4 in einer Kurve jedoch, wie bei einer Straßenbahn, mit der Oberkante der Straße ab, kann die Breite der Hinterräder auch kleiner sein. Die Hinterräder rollen dann nicht mehr auf der Schiene, sondern auf der "Straße".

Da es allein in Europa 6 verschiedene Stromsysteme gibt, ist die kontinuierliche Energieversorgung beim Überschreiten der Grenzen derzeit nur mit Dualsystemlokomotiven möglich.
Die Umwandlung der Spannung von einem System zu jedem anderen ist technisch bereits möglich. Da jeder Wagen jedoch nur einen Bruchteil der Leistung einer heutigen Lokomotive benötigt fallen die Spannungswandler viel kleiner und leichter aus. Somit können die Wagen alle mit einer Spannung betrieben werden und nur die Spannungswandler müssen gewechselt werden. Der Wechsel des Spannungswandlers könnte auch während der Fahrt erfolgen, indem zu jedem Wagen ein Servicefahrzeug parallel fahrt, den Antrieb des Wagens übernimmt und die Spannungswandler tauscht. Danach versorgt sich der Wagen wieder selbst mit Strom und das Servicefahrzeug klinkt sich wieder aus. Der herausgenommene Spannungswandler kann dann in einen Wagen des Gegenverkehrs eingesetzt werden.

Die Funktionsweise des Synchrotrains wird vor allem im Bereich eines Bahnhofs deutlich. Fig. 7 zeigt die prinzipielle Struktur eines Bahnhofs der bei zunehmender Kapazität beliebig erweitert werden kann. Das Bahnhofskonzept ist auch so ausgelegt, dass beliebig viele Wagen unmittelbar hintereinander die Hauptstrecke über eine passive Weiche 9 verlassen können, ohne auf der Hauptstrecke einen Rückstau zu erzeugen. Die Anzahl wird nur von der Anzahl der Boxen 13 bestimmt. Ermöglicht wird dies dadurch, dass nach dem Abzweigen von der Hauptstrecke nicht die Geschwindigkeit reduziert wird, sondern mit der gleichen Geschwindigkeit bis hinter die nächste Abzweigung 10 weitergefahren wird. Nach links kann nur noch jeder zweite Wagen abbiegen, da nun die Geschwindigkeit auf die Hälfte reduziert wird. Für die Wagen die geradeaus fahren gibt es nun zwei Möglichkeiten. Entweder reduzieren sie nun auch ihre Geschwindigkeit auf die Hälfte oder fahren mit voller Geschwindigkeit weiter. Im zweiten Fall hat man jeweils nach dem links Abbiegen 10 gleiche Verhältnisse, was die Logistik etwas vereinfacht und Fahrzeit spart. Außerdem hat man hier mehr Flexibilität da nicht bereits an der ersten Abblegemöglichkeit nach links jeder zweite direkt hintereinander fahrende Wagen abbiegen muß. Dafür kostet sie etwas mehr Energie als die erste Variante. Hinter der nächsten Abzweigung 11 wird wieder die Geschwindigkeit um die Hälfte reduziert. Das bedeutet, dass jeder zweite direkt hintereinander fahrende Wagen abbiegen muß. Bei einer Synchrongeschwindigkeit von 200 km/h ist man nun schon bei 50 km/h. Diese Geschwindigkeit kann nach einer Abzweigung 12 leicht bis zum Stillstand in einer Box 13 reduziert werden. Es könnte aber auch noch eine weitere Stufe eingerührt werden.
Die in Fig. 7 gezeigte Variante ist die Minimalform, die bei leeren Boxen bereits 16 direkt hintereinander fahrende Wagen aufnehmen kann. Die Maximalkonfiguration, welche alle Wagen bei einer Synchrongeschwindigkeit von 200 km/h einer Wagenlänge von 10 m und einer Ent- und Beladezeit von 30 s aufnehmen könnte, benötigt ca. 168 Boxen, also jeweils 42 anstatt 4.
Wenn nach dem Ent- und Beladen auf der Hauptstrecke eine freie Stelle vorhanden ist (genaueres weiter unten), wird der Wagen erst auf 1/4 der Synchrongeschwindigkeit beschleunigt. Nach der Abzweigung 14 muß auf die Hälfte und nach der nächsten Abzweigung auf die volle Synchrongeschwindigkeit beschleunigt werden, damit der Wagen dann den Fluß auf der Hauptstrecke nicht beeinflußt.

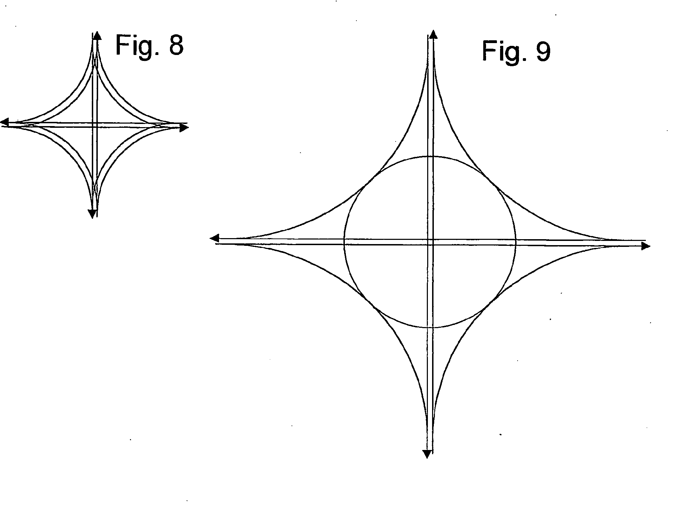

Kreuzungen von Trassen oder Abzweigungen beinhalten meist einen starken Richtungswechsel. Für Hochgeschwindigkeitsstrecken gibt die deutsche Eisenbahnbauordnung z.B. einen minimalen Radius von 300 m vor. Da der Synchrotrain überall die gleiche Geschwindigkeit verlangt, können Kreuzungen von Trassen oder Abzweigungen nicht wie heutige Autobahnkreuze gebaut werden. Auf Grund der Begrenzung der minimalen Radien ergeben sich zwei Varianten von Kreuzungen. Eine ohne Fig. 8 und die andere mit Fig. 9 der Möglichkeit zum Wenden. Bei der zweiten Variante ist ein erheblich größerer Platzbedarf vorhanden, da die Rechtsabbiegerspur mit mindestens dem 4 fachen Radius der ersten Version ausgestattet sein muß. Die Bilder sind annähernd im gleichen Maßstab. Außerdem ist fraglich, ob bei einem automatisierten Betrieb die Möglichkeit zum Wenden auf freier Strecke überhaupt benötigt wird.

### Bezugszeichenliste

- 1: erstes Abtastsystem mit zwei Rädern für die Schienen 4 des herkömmlichen Gleises
- 2: zweites Abtastsystem mit einem Rad für die Führungsschiene 5
- 3: Tragende Räder
- 4: die Schienen des herkömmlichen Gleises (Traktionsschienen)
- 5: Führungsschiene
- 6: herkömmliches Gleis anderer Spurweite
- 7: drittes Abtastsystem mit einem Rad für die Führungsschiene 5
- 8: aktiver Teil der herkömmlichen aktiven Weiche
- 9: passive Weiche zum Abbiegen zu einem Bahnhof
- 10: passive Weichen nach denen die Geschwindigkeit um die Hälfte reduziert wird
- 11: passive Weichen nach denen die Geschwindigkeit um die Hälfte reduziert wird, also auf ¼
- 12: passive Weichen zum Verzweigen auf einzelne Halteboxen
- 13: parallel liegende Halteboxen zur parallelen Abfertigung
- 14: passive Weichen zum zusammenführen der Wagen mit ¼ der Zielgeschwindigkeit

## Patentansprüche

1. Aktives, schienengebundenes Transportsystem für den öffentlichen, individuellen und automatisierten Verkehr von Personen oder Gütern auf herkömmlichen Schienen (4) ohne Fahrer, bei dem zwei automatisch gesteuerte Führungssysteme derart angeordnet sind, dass aus dem fahrenden Verband (Zug) einzelne Wagen mit eigenem Antrieb, Bremse und Lenkung nur durch Wechsel des die Lenkung mechanisch beeinflussenden Führungssystems, durch das Absenken und Anheben des zugehörigen Abtastsystems (1, 2, 7), ausgeleitet, abgebremst, ent- und/oder beladen und dann an anderer Stelle, nachdem die Geschwindigkeit der einzelnen Wagen der des Verbandes angeglichen wurde, wieder in einen fahrenden Verband (Zug) einleitbar sind, wobei das erste Führungssystem mit einem ersten Abtastsystem (1) an jedem Wagen und den herkömmlichen Schienen (4) der laufenden Traktion dient und das zweite Führungssystem mit einem zweiten Abtastsystem (2), neben dem ersten Abtastsystem (1) an jedem Wagen angeordnet, und den seitlich neben den herkömmlichen Schienen (4) angebrachten zusätzlichen Führungsschienen (5) die Richtung beim Überfahren von Weichen bestimmt, **dadurch gekennzeichnet, dass**
- das erste Abtastsystem (1) des ersten Führungssystems während der Fahrt an unterschiedliche Spurweiten anpaßbar ist,
- dem zweiten Führungssystem für das Befahren von Weichen und Kreuzungen zwei Abtastsystem (2, 7) an den Wagen mit dazugehörender Führungsschiene (5) neben den Schienen (4) zugeordnet sind,
- alle drei Abtastsysteme (1, 2, 7), für das erste und für das zweite Führungssystem, unabhängig voneinander absenk- und anhebbar sind und
- für die Lenkung der lenkbaren tragenden Achsen mindestens eines der drei verschiedenen Abtastsysteme (1, 2, 7) aktiviert ist.

2. Transportsystem nach Anspruch 1, **dadurch gekennzeichnet, dass** die Führungsschiene (5) bei Krümmungen die Form einer Klotoide hat.

3. Transportsystem nach Anspruch 1 und 2, **dadurch gekennzeichnet, dass** zur Richtungswahl an einer Weiche oder Kreuzung gleichzeitig rechts und links jeweils eine Führungsschiene (5) in einem Abstand zu den Schienen (4) angeordnet ist.

4. Transportsystem nach Anspruch 1 und 3 **dadurch gekennzeichnet, dass** das erste Abtastsystem (1) beim Überfahren von Weichen von den Schienen (4) abgehoben wird, während eins der beiden anderen Abtastsysteme (2, 7), je nach Richtungsänderung, auf die Führungsschiene (5) abgesenkt ist.

5. Transportsystem nach Anspruch 1 und 2, **dadurch gekennzeichnet, dass** die Weichen passive Weichen sind und zur Richtungswahl nur einseitig eine Führungsschiene (5) in einem Abstand zu den Schienen (4) angebracht ist.

6. Transportsystem nach Anspruch 1 und 3 bzw. 1 und 5, **dadurch gekennzeichnet, dass** nur bei einer Richtungsänderun das erste Abtastsystem (1), beim Überfahren einer passiven Weiche bzw. einer Kreuzung, von den Schienen (4) abgehoben wird, während eins der beiden anderen Abtastsysteme (2, 7) auf die Führungsschiene (5) abgesenkt ist.

7. Transportsystem nach Anspruch 1, **dadurch gekennzeichnet, dass** für einen Wechsel der Spurweite der Abstand der beiden die Schienen (4) des herkömmlichen Gleises abtastenden Räder zueinander im angehobenen Zustand auf eine andere Spurbreite einstellbar ist, während mindestens eins der anderen Abtastsysteme (2, 7) die Lenkung mit Hilfe seitlich angebrachter Führungsschienen (5) beeinflusst.

8. Transportsystem nach den vorangegangenen Ansprüchen, **dadurch gekennzeichnet, dass** nur die vorderen Räder lenkbar und die hinteren Räder breiter ausgeführt sind.

9. Transportsystem nach Anspruch 8, **dadurch gekennzeichnet, dass** die Breite der Hinterräder abhängig vom Achsabstand und dem kleinsten Kurvenradius ist.

10. Transportsystem nach Anspruch 8, **dadurch gekennzeichnet, dass** bei sehr kleinen Kurvenradien und kleinen Geschwindigkeiten die Schienen (4) wie bei einer Straßenbahn im Straßenbereich verlegt sind und somit die Hinterräder anstatt auf den Schienen (4) auf der Straße rollen.

11. Transportsystem nach Anspruch 1, **dadurch gekennzeichnet, dass** das herkömmliche Gleis partiell mit Linearmotoren ausgerüstet sind.

## Claims

1. An active rail transport system for public, individual and automated transport of persons or goods on conventional rails (4) without using a conductor, in which two automatically controlled conducting systems are arranged such that individual cars that have an autonomous drive unit, brake, and steering mechanism can be directed away from the rolling convoy (train), be decelerated, unloaded and/or loaded by merely changing the conducting system that mechanically influences the steering mechanism, lowering and lifting an associated scanning system (1, 2, 7), and can be redirected into a rolling convoy (train) at a different point after the speed of the individual cars has been adjusted to the speed of the convey, wherein the first conducting system, which comprises a first scanning system (1) on each car and on the conventional rails (4), is used for providing continuous traction, and the second conducting system comprising a second scanning system (2) arranged next to the first scanning system (1) on each car and on the additional guidance rails (5) installed on the side next to the conventional rails (4), determines the direction when going over points, **characterised in that**
- the first scanning system (1) of the first conducting system can be adjusted during the journey to different track gauges,
- to the second conducting system for going over points and crossings, two scanning systems (2, 7) at the cars with associated guidance rail (5) alongside the rails (4) are allocated,
- all three scanning systems (1, 2, 7) for the first and the second conducting system can be lowered and lifted independent from each other, and
- for the steering of the steerable carrying axles at least on of the three different scanning systems (1, 2, 7) is activated.

2. The transport system according to claim 1, **characterised in that** the guidance rail (5) in curves has the form of a clothoid.

3. The transport system according to claim 1 and claim 2, **characterised in that** for selection of the direction at a point or a crossing, one guidance rail (5) is arranged respectively at the same time on the right and on the left with a distance to the rails (4).

4. The transport system according to claim 1 and claim 3, **characterised in that** the first scanning system (1) is lifted when going over points of the rails (4) while one of the two other scanning systems (2, 7), depending on the change of direction, is lowered onto the guidance rail (5).

5. The transport system according to claim 1 and 2, **characterised in that** the points are passive points, and for selection of the direction, only on one side a guidance rail (5) is arranged with a distance to the main rail (4).

6. The transport system according to claim 1 and claim 3 or claim 1 and claim 5, respectively, **characterised in that** only in case of a change of direction, the first scanning system (1) is lifted from the rails (4) when going over a passive point or a crossing, respectively, while one of the two other scanning systems (2, 7) is lowered onto the guidance rail (5).

7. The transport system according to claim 1, **characterised in that** for a change of the track gauge, the distance to each other of the wheels scanning the two rails (4) of the conventional track can be adjusted in the lifted state to a different track gauge while at least one of the two other scanning systems (2, 7) influences the steering by means of guidance rails (5) attached on the side.

8. The transport system according to the preceding claims, **characterised in that** only the front wheels can be steered and the rear wheels are built wider.

9. The transport system according to claim 8, **characterised in that** the width of the rear wheels depends on the axis-centre distance and the smallest curve radius.

10. The transport system according to claim 8, **characterised in that** for very small curve radii and low speed, the rails (4) are placed in the road area, as for a tram, and the rear wheels hence roll on the road instead on the rails.

11. The transport system according to claim 1, **characterized in that** the conventional track is partially equipped with linear motors.

## Revendications

1. Système de transport actif sur rail pour trafic public, individuel et automatisé de personnes ou de biens sur des rails traditionnels (4) sans conducteur, dans lequel deux systèmes de guidage commandés automatiquement sont disposés de manière à ce que des wagons distincts du convoi en circulation (train) dotés de leur propre propulsion, frein et direction soient déviés, freinés, déchargés et/ou chargés seulement en changeant de système de guidage influant mécaniquement sur la direction en abaissant et en relevant le système de balayage correspondant (1, 2, 7) et puissent ensuite, à un autre endroit, une fois que la vitesse des wagons individuels est devenue égale à celle du convoi, être réintroduits dans un convoi en circulation (train), le premier système de guidage comportant un premier système de balayage (1) au niveau de chaque wagon servant à la traction courante et des rails traditionnels (4) et le deuxième système de guidage comportant un deuxième système de balayage (2) outre le premier système de balayage (1) étant disposé au niveau de chaque wagon et déterminant la direction lors du passage sur les aiguillages pour les rails de guidage supplémentaires (5) installés latéralement près des rails traditionnels (4), **caractérisé en ce que**
- le premier système de balayage (1) du premier système de guidage peut être adapté pendant la circulation à différents écartements de roues,
- il est attribué au deuxième système de guidage pour le passage sur des aiguillages et des croisements deux systèmes de balayage (2, 7) au niveau des wagons avec un rail de guidage correspondant (5) près des rails (4),
- les trois systèmes de balayage (1, 2, 7) pour le premier et le deuxième système de guidage peuvent être abaissés et relevés indépendamment les uns des autres et
- au moins un des trois systèmes de balayage différents (1, 2, 7) est activé pour la direction des essieux porteurs dirigeables.

2. Système de transport selon la revendication 1, **caractérisé en ce que** le rail de guidage (5) a la forme d'une clothoïde en cas de courbure.

3. Système de transport selon les revendications 1 et 2, **caractérisé en ce que**, pour choisir la direction sur un aiguillage ou un croisement, un rail de guidage (5) est disposé respectivement en même temps à droite et à gauche à distance des rails (4).

4. Système de transport selon les revendications 1 et 3, **caractérisé en ce que** le premier système de balayage (1) est relevé des rails (4) lors du passage sur des aiguillages tandis qu'un des deux autres systèmes de balayage (2, 7) est abaissé vers le rail de guidage (5) suivant le changement de direction.

5. Système de transport selon les revendications 1 et 2, **caractérisé en ce que** les aiguillages sont des aiguillages passifs et que, pour le choix de la direction, un rail de guidage (5) est disposé sur un seul côté à distance des rails (4).

6. Système de transport selon les revendications 1 et 3 ou 1 et 5, **caractérisé en ce que** c'est seulement en cas de changement de direction que le premier système de balayage (1) est relevé des rails (4) lors du passage sur un aiguillage passif ou un croisement tandis qu'un des deux autres systèmes de balayage (2, 7) est abaissé vers le rail de guidage (5).

7. Système de transport selon la revendication 1, **caractérisé en ce que**, pour changer l'écartement des roues, la distance entre les deux roues balayant les rails (4) de la voie traditionnelle en position relevée peut être réglée à un autre écartement de roues, tandis qu'au moins un des autres systèmes de balayage (2, 7) influe sur la direction à l'aide de rails de guidage (5) disposés latéralement.

8. Système de transport selon une des revendications précédentes, **caractérisé en ce que** seules les roues avant sont dirigeables et que les roues arrière ont une conformation plus large.

9. Système de transport selon la revendication 8, **caractérisé en ce que** la largeur des roues arrière est indépendante de la distance entre les essieux et du plus petit rayon de courbure.

10. Système de transport selon la revendication 8, **caractérisé en ce que**, en cas de rayons de courbure très réduits et de vitesses réduites, les rails (4) sont posés comme pour un tramway dans le secteur routier et qu'ainsi les roues arrière roulent sur la route au lieu de rouler sur les rails (4).

11. Système de transport selon la revendication 1, **caractérisé en ce que** les voies traditionnelles sont équipées partiellement de moteurs linéaires.
